# EUROPEAN PATENT APPLICATION

(11) **EP 2 755 170 A1**
(43) Date of publication of application: **16.07.2014**
(21) Application number: 14150514.9
(22) Date of filing: 08.01.2014
(51) Int. Cl.: G06N 5/00

(54) **Data management system and tool**

(30) Priority: 10.01.2013 IN CH01602013
(71) Applicant: Mu Sigma Business Solutions Pvt. Ltd., Bangalore 560066 (IN)
(72) Inventor: Rajaram, Dhiraj, Northbrook, IL 60062 (US)
(74) Representative: Stewart, Hazel

(57) **Abstract**

A data management system is provided that comprises a data collation module configured to collect data for a problem statement specified by a client. The data collation system comprises a situation control question (SCQ) module configured to create a SCQ matrix. The SCQ matrix is configured to enable one or more users to define a current state and a desired solution of a problem defined by the problem statement. The data collation system also comprises a factor map module configured to create a factor map to enable one or more users to enumerate a plurality of factors that directly and/or indirectly contribute to the problem. The data collation system further comprises a hypothesis module configured to create a hypothesis matrix that enables one or more users to formulate one or more hypotheses based on the problem statement. The data management system further comprises memory circuitry coupled to the data collation module and configured to store data related to the problem statement.

## Description

### BACKGROUND

The invention relates generally to data management systems, and more particularly to a system and tool for collating data for a defined problem to enable accurate data analysis.

Data collation is generally the process of collecting information on topics of interest in an established systematic fashion. Data collation or collection is a common component to all fields of study including physical and social sciences, humanities, business, etc. While methods vary by discipline, the emphasis on ensuring accurate collection of data remains the same.

Data collation is usually an important component of data analysis systems. Accurate data collection is critical for effective results during data analysis. There are many problems associated with the inaccurate collection of data. One such problem is the inability to answer specific research questions and to repeat and validate the study. Distorted data also result in wasted resources and can be misleading.

In current data management systems, the data is typically collected using an unstructured format leading to inadequate and sometimes irrelevant data. Moreover, some systems employ using several questions to collect data. However, such questions are subjected to bias based on the individual(s) framing the questions and the knowledge of the assignment.

Therefore, a systematic approach for data collation is desired as it ensures that data collected are defined, unbiased and accurate ensuring that subsequent decisions based on arguments embodied in the findings are valid.

### SUMMARY

Briefly, according to one aspect of the invention, a data management system is provided. The data management system comprises a data collation module configured to collect data for a problem statement specified by a client. The data collation system comprises a situation control question (SCQ) module configured to create a SCQ matrix. The SCQ matrix is configured to enable one or more users to define a current state and a desired solution of a problem defined by the problem statement. The data collation system also comprises a factor map module configured to create a factor map. The factor map is configured to enable one or more users to enumerate a plurality of factors that directly and/or indirectly contribute to the problem. The data collation system further comprises a hypothesis module configured to create a hypothesis matrix. The hypothesis matrix is configured to enable one or more users to formulate one or more hypotheses based on the problem statement. The data management system further comprises memory circuitry coupled to the data collation module and configured to store data related to the problem statement.

In another embodiment, a data management tool for collating data for a defined problem statement is provided. The data management tool comprises a situation control question (SCQ) interface configured to enable one or more users to define a current state and a desired solution of a problem defined by the problem statement, a factor map interface configured to enable one or more users to enumerate a plurality of factors that directly and/or indirectly contribute to the problem and a hypothesis interface configured to enable one or more users to formulate one or more hypotheses based on the problem statement; wherein the one or more hypotheses are represented together in a hypothesis matrix.

### BRIEF DESCRIPTION OF THE FIGURES

These and other features, aspects, and advantages of the present invention will become better understood when the following detailed description is read with reference to the accompanying drawings in which like characters represent like parts throughout the drawings, wherein:
FIG. 1 is a block diagram of a general purpose computer implemented according to aspects of the present technique;
FIG. 2 is a block diagram of one embodiment of a data collation module implemented according to aspects of the present technique;
FIG. 3 is a flow chart illustrating one method by which data can be collated using a computer system implemented according to aspects of the present technique;
FIG. 4 is a block diagram of a Situation-Complication-Question matrix implemented according to aspects of the present technique;
FIG. 5 is an example Situation-Complication-Question matrix interface defined for a specific problem statement implemented according to aspects of the present technique;
FIG. 6 is an example factor map interface implemented according to aspects of the present technique;
FIG. 7 is an example hypothesis interface implemented according to aspects of the present technique;
FIG. 8 is an example structured format questionnaire interface implemented according to aspects of the present technique;
FIG. 9 is an example quality check questionnaire interface implemented according to aspects of the present technique;
FIG. 10 is an example log-in screen for a data management tool implemented according to aspects of the present technique; and
FIG. 11 is an example home interface for a data management tool implemented according to aspects of the present technique.

### DETAILED DESCRIPTION

The present invention provides a data management system configured to collect and collate data for a defined problem statement to enable accurate data analysis. The technique uses a data collation framework that has been designed to collect data in a structured fashion. The framework ensures appropriate emphasis on sufficient and effective collection of data leading to accurate representation and scoping of business problems.

References in the specification to "one embodiment", "an embodiment", "an exemplary embodiment", indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

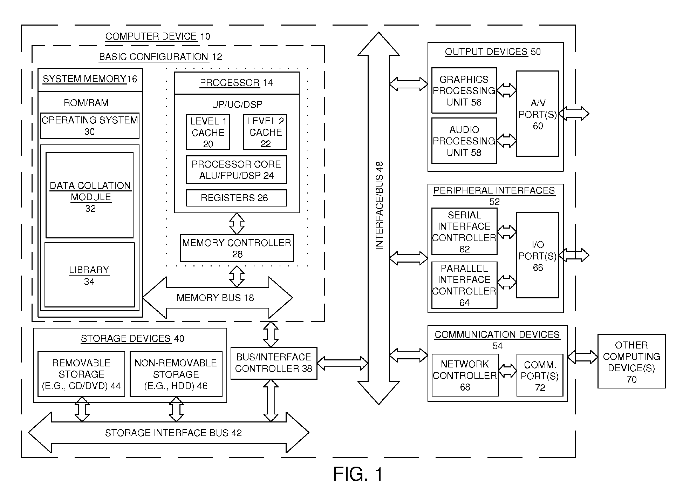

Turning now to drawings and referring first to FIG. 1, a block diagram of an example data management system 10 that is arranged for collating data in accordance with the present technique is shown. In a very basic configuration 12, data management system 10 typically includes one or more processors 14 and a system memory 16. A memory bus 18 may be used for communicating between processor 14 and system memory 16.

Depending on the desired configuration, processor 14 may be of any type including but not limited to a microprocessor (µP), a microcontroller (µC), a digital signal processor (DSP), or any combination thereof. Processor 14 may include one or more levels of caching, such as a level one cache 20 and a level two cache 22, a processor core 24, and registers 26. An example processor core 24 may include an arithmetic logic unit (ALU), a floating point unit (FPU), a digital signal processing core (DSP Core), or any combination thereof. An example memory controller 28 may also be used with processor 14, or in some implementations memory controller 28 may be an internal part of processor 14.

Depending on the desired configuration, system memory 16 may be of any type including but not limited to volatile memory (such as RAM), non-volatile memory (such as ROM, flash memory, etc.) or any combination thereof. System memory 16 may include an operating system 30, one or more data collation module 32 and data 34.

Data collation module 32 is configured to collect data for a problem statement, wherein the problem statement is specified by a client. Library 34 may include input data, string data, numeral data, factors affecting a problem and hypotheses as is described herein. The library 34 may also include historical data related to problem statements defined in other projects. This described basic configuration 12 is illustrated in FIG. 1 by those components within the inner dashed line.

Data management system 10 may have additional features or functionality, and additional interfaces to facilitate communications between basic configuration 12 and any required devices and interfaces. For example, a bus/interface controller 38 may be used to facilitate communications between basic configuration 12 and one or more data storage devices 40 via a storage interface bus 42. Data storage devices 40 may be removable storage devices 44, non-removable storage devices 46, or a combination thereof.

Examples of removable storage and non-removable storage devices include magnetic disk devices such as flexible disk drives and hard-disk drives (HDD), optical disk drives such as compact disk (CD) drives or digital versatile disk (DVD) drives, solid state drives (SSD), and tape drives to name a few. Example computer storage media may include volatile and nonvolatile, removable and non-removable media implemented in any method or technology for storage of information, such as computer readable instructions, data structures, program modules, or other data.

System memory 16, removable storage devices 44 and non-removable storage devices 46 are examples of computer storage media. Computer storage media includes, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which may be used to store the desired information and which may be accessed by data management system 10. Any such computer storage media may be part of data management system 10.

Data management system 10 may also include an interface bus 48 for facilitating communication from various interface devices (e.g., output devices 50, peripheral interfaces 52, and communication devices 54) to basic configuration 12 via bus/interface controller 38. Example output devices 50 include a graphics processing unit 56 and an audio processing unit 58, which may be configured to communicate to various external devices such as a display or speakers via one or more A/V ports 60.

Example peripheral interfaces 52 include a serial interface controller 62 or a parallel interface controller 64, which may be configured to communicate with external devices such as input devices (e.g., keyboard, mouse, pen, voice input device, touch input device, etc.) or other peripheral devices (e.g., printer, scanner, etc.) via one or more I/O ports 66. An example communication device 54 includes a network controller 68, which may be arranged to facilitate communications with one or more other data management systems 70 over a network communication link via one or more communication ports 72.

The network communication link may be one example of a communication media. Communication media may typically be embodied by computer readable instructions, data structures, program modules, or other data in a modulated data signal, such as a carrier wave or other transport mechanism, and may include any information delivery media. A "modulated data signal" may be a signal that has one or more of its characteristics set or changed in such a manner as to encode information in the signal. By way of example, and not limitation, communication media may include wired media such as a wired network or direct-wired connection, and wireless media such as acoustic, radio frequency (RF), microwave, infrared (IR) and other wireless media. The term computer readable media as used herein may include both storage media and communication media.

Data management system 10 may be implemented as a portion of a small-form factor portable (or mobile) electronic device such as a cell phone, a personal data assistant (PDA), a personal media player device, a wireless web-watch device, a personal headset device, an application specific device, or a hybrid device that include any of the above functions. It may be noted that data management system 10 may also be implemented as a personal computer including both laptop computer and non-laptop computer configurations.

In one embodiment, data management system 10 is configured to collate and analyze data related to a problem. In general, the problem is represented by a problem statement that is usually defined by a client. As used herein, client refers to any entity that employs the data management system described herein to arrive at an optimum solution for one or more problems. The data management system 10 includes a data collation module 32 that is configured to collate data related to the problem statement. The manner in which the data collation module 32 operates is described in further detail below.

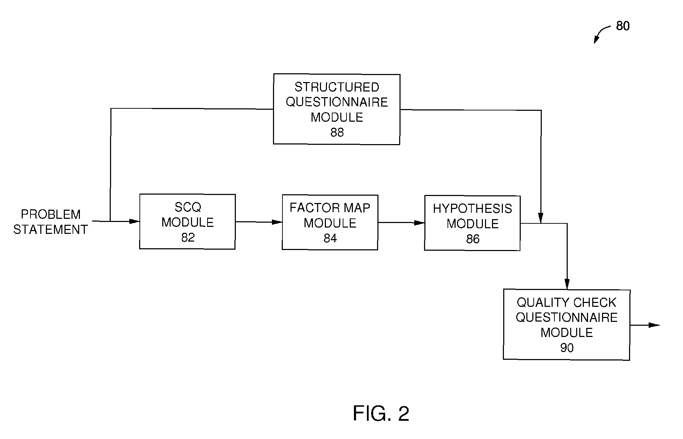

FIG 2 is a block diagram of one embodiment of a data collation module implemented according to aspects of the present technique. The data collation module 80 includes a Situation-Complication-Question (SCQ) module 82, a factor map module 84 and a hypothesis module 86. In one embodiment, these modules are used to generate one or more templates that are populated by one or more users. The data from the populated templates are then collated for further analysis. In addition, the data collation module 80 further includes a structured questionnaire module 88 and a quality check questionnaire module 90. Each module is described in further detail below.

The SCQ module 82 is configured to create an SCQ matrix based on the problem statement received from the client. In one embodiment, the SCQ matrix is presented to one or more users in the form an SCQ interface as will be illustrated later. The SCQ matrix represents a current state of the problem, a desired solution of the problem. Further, the SCQ matrix includes gaps between the current state and the desired solution of the problem. In addition, the SCQ template includes a set of questions representing critical challenges.

In one embodiment, the SCQ matrix include input fields for the current state of the problem, the desired solution of the problem, the gaps and the challenges. One or more users may provide answers to each component. It may be noted that the one or more users are data analysts.

Factor map module 84 is configured to create a factor map defining the various factors that directly or indirectly contribute to the problem defined by the client. The factor map may also be presented to onr or more users in the form a factor map interface as will be illustrated later. In one embodiment, the factor map template is editable. For example, the client may add or delete the influencing factors depending upon the nature of the problem.

The hypothesis module 86 is configured to create a hypothesis matrix for the specified problem statement by the client. In one embodiment, the hypothesis matrix is presented to one or more users in the form of a hypothesis interface. In one embodiment, the hypothesis matrix is used to determine sufficiency of the data collated for the specified problem statement to proceed for data analysis.

The structured questionnaire module 88 is configured to create a structured questionnaire that enables the client to provide additional information of the problem statement. In one embodiment, the structured questionnaire is presented to one or more users as a structured questionnaire interface 88. The structured questionnaire captures a problem stated using very specific questions, each having a corresponding input field. The input fields are populated by users and the data thus captured facilitates quick insights to the problem defined by the client.

The quality check questionnaire module 90 is configured to create a quality check chart. In one embodiment, the quality check chart is presented to the users as a quality check interface that can be populated after completing the SCQ matrix, factor map, hypothesis matrix and the structured questionnaire. The quality check chart is used to perform data checks that involve defining metrics and the expectations. The quality check chart can be used to perform both input and output data checks to define metrics and its corresponding expectations.

In one embodiment, the data collation module is implemented as a data management tool that may be executed on a computing device. The data management tool presents the SCQ matrix, factor map, hypothesis matrix, structured questionnaire and the quality check chart as user interfaces to users. In one embodiment, all interfaces include input fields that can receive various types of data.

In one embodiment, all the interfaces are built using ADOBE. In another embodiment, all interfaces are exportable in non-editable formats like images, text files, excel sheets, etc. As described above the data collation module is configured to collect data in a structured fashion. The manner in which data is collected and collated is described in further detail below.

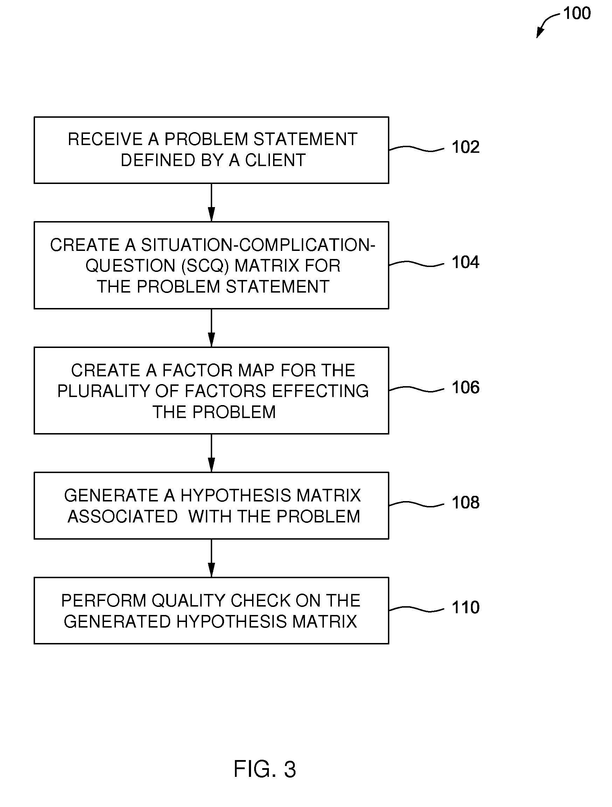

FIG. 3 is an example flow diagram 100 of one method of collating data using a data management system implemented according to aspects of the present technique. For conciseness, the flow chart is for a problem statement that is defined by a client. It is also noted that the user is a data analyst employing a data management system (such as the system described in FIG. 1) to resolve the defined problem. Each step of the process is described below.

At block 102, a problem statement is received. In one embodiment, the problem statement is defined by a client. An example business problem statement includes low sales of a product, marketing feedback at a particular location, employee satisfaction, challenges from similar products by a competitor, etc.

At block 104, a situation-complication-question (SCQ) matrix for the defined problem is created. In one embodiment, the SCQ matrix is represented using a current state of the problem, a desired solution of the problem and gaps between the current state and the desired solution of the problem. The SCQ matrix also includes key questions related to the gaps. The SCQ matrix aims at simplifying the problem statement and defining clear insights regarding the desired solution.

At block 106, a factor map is created for the defined problem statement. In one embodiment, the factor map includes the various factors that directly or indirectly contribute to the problem defined by the client. Factors may be added or deleted based on the nature of the problem statement.

In one embodiment, an exhaustive list of factors for each problem statement is created. In one embodiment, the factors are created by using historical data from the client or other data analysts affected by similar problems and associated with the similar business environment. Further, the factor may be assigned to one or more factor categories. As will be appreciated by one skilled in the art, the number and types of the factor categories may be pre-determined and such factor categories may be periodically updated.

At block 108, a hypothesis matrix associated with the problem statement is created. The hypothesis matrix includes a set of hypothetical statements. Each hypothetical statement may include one or more component questions. In addition, a set of data elements associated with the hypothetical statement is also identified. The hypothesis matrix is populated by the data analyst based on an availability of the identified set of data elements.

In one embodiment, the hypothesis matrix is checked to determine whether the identified data elements are sufficient to proceed for data analysis. Typically, a data analyst makes the determination based on functional knowledge. If data available are sufficient, then the system saves the 'collated data' which is later used by various analytical tools for data analysis. If the data is not sufficient, the data analyst may proceed to alter the SCQ/factor map/hypothesis matrix based on the requirements. In addition, the component questions of each hypothesis determines a course for data analysis.

At block 110, a quality check is performed on the populated hypothesis matrix. In one embodiment, the quality check is performed for input as well as output data to ensure that the identified data elements are relevant to the specified problem statement.

As described above, one of the key components of the data collation module is the Situation-Complication-Question matrix. The manner in which the SCQ matrix is configured to collate data associated to a general problem statement is described below.

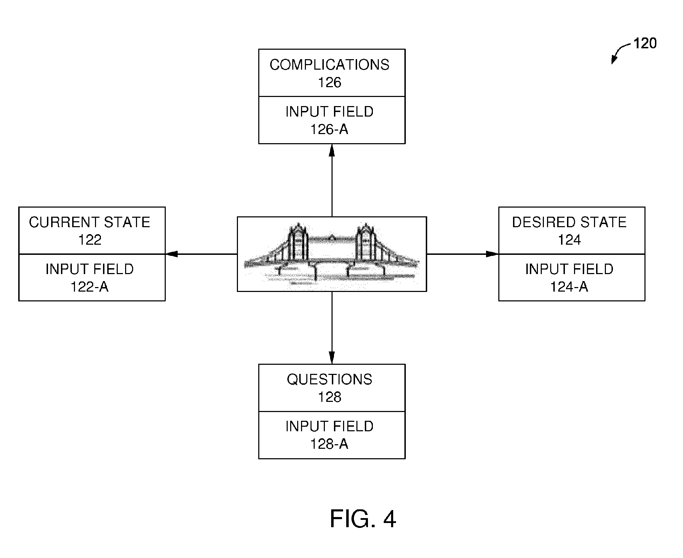

FIG. 4 is a block diagram of an example Situation-Complication-Question (SCQ) matrix implemented according to aspects of the present technique. It may be noted that the format of the SCQ matrix 120 is for example purposes only. As illustrated, the problem is represented using a current state 122 of the problem, a desired solution or desired state 124 and complications or gaps 126 between the current state of the problem and the desired state of the problem.

The SCQ matrix 120 further enables the data analyst to enter a plurality of questions 128 related to the gaps between the current state and the desired state of the problem that are required to be answered to achieve the desired solution. An input field associated with each of the current state, desired state, complications and questions enables the client/data analyst for keying data related to a specific problem. These input fields are represented using reference numerals 122-A, 124-A, 126-A and 128-A respectively.

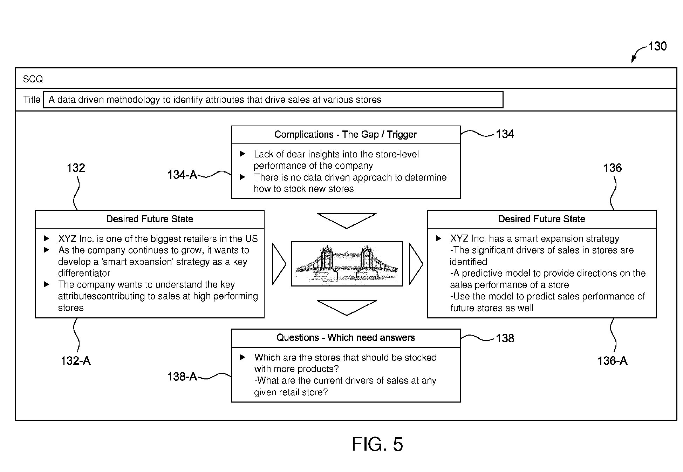

FIG. 5 is an example Situation-Complication-Question (SCQ) matrix interface 130 defined for a specific problem statement. As described before, the problem is represented using a current state of the problem (cell 132), gaps (cell 134) between the current state of the problem and the desired solution of the problem and a desired solution or future desired state (cell 136). The interface 130 enables one or more users to provide a plurality of questions (cell 138) related to the gaps between the current state and the desired state of the problem that are required to be answered to achieve the desired state.

In this exemplary embodiment, the interface 130 shows the details for a project related to a client's sales at various stores. The cell 132 depicts the current situation. As shown, it includes known facts related to the current state of the problem such as key attributes contributing to sales at high performing stores. In one embodiment, one or more users may provide the known facts in input field 132-A.

The cell 134 includes the details of the gaps/complication for the specified problem statement such as non-availability of data driven approach to determine how to stock new stores. These facts are provided using the associated input field 134-A. The facts related to the future desired state are listed in cell 136 using the input field 136-A. For example, in the current project, it is expected that the significant drivers of sales in stores are identified.

The questions (cell 138) related to the gaps are provided using input field 138-A for this example include questions like the stores that should be stocked with more products. As will be appreciated by one skilled in the art, a variety of other questions may be formulated in the problem definition phase.

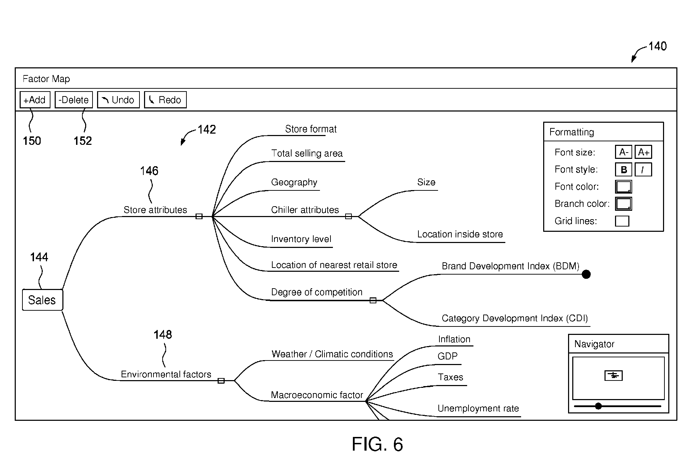

FIG. 6 is an example factor map interface 140 for an example problem statement implemented by a data management tool implemented according to aspects of the present technique. In the illustrated embodiment, the cell includes a plurality of factors 142 that contribute to the problem. In one embodiment, the factors are identified by one or more users of the data management tool.

In the illustrated example, the sales factor 144 is further categorized into factor categories like store attributes 146 and environmental factors 148. The store attribute factor category includes various factors like store format, geography, inventory level and so forth. Further, the environmental factors include weather conditions, macroeconomic factors etc.

An exhaustive list of factors may be created by as required. Such list of factors may be updated on a regular or a periodic basis using the tabs "Add" (cell 150) and "Delete" (cell 152) provided in the interface 140. Moreover, formatting and navigating options are also provided in the interface 140 to facilitate format change and easy navigation.

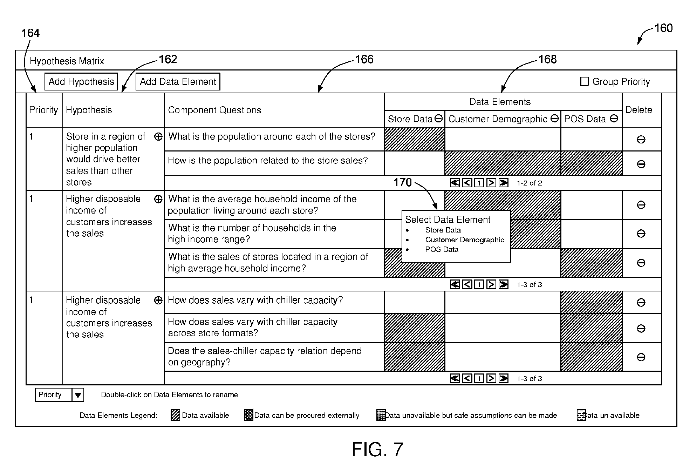

FIG. 7 is an example hypothesis matrix interface 160 for an example problem statement implemented by a data management tool implemented according to aspects of the present technique. In the illustrated embodiment, cell 162 includes a plurality of hypotheses related to the problem. Referring back to the previous example of sales at various stores, the plurality of hypotheses may include hypotheses such as "Store in a region of higher population would drive better sales than other stores", "Higher disposable income of customers increases the sales", among others.

In this exemplary embodiment, the interface 160 may include an additional cell 164 for assigning the priority levels to the hypotheses. Moreover, one or more associated component questions are formulated corresponding to each of the plurality of hypotheses and data elements associated with the component questions are identified (cells 166 and 168). Example component questions corresponding to the example hypotheses include "What is the population around each of the stores?" and "What is the number of households in the high income range?" Such questions may be provided to the system by data analyst affected by the business problem, programmers and system administrators.

Moreover, cell 168 includes data elements corresponding to the component questions. The data elements are utilized for validating the plurality of hypotheses. For example, the data elements corresponding to the hypotheses described above may include store data, customer demographic, POS data and so forth. In certain embodiments, the data elements may be categorized and color-coded based upon accessibility and/or availability of the data. Such data elements may be prioritized and collected based upon assigned priority levels. Similarly, the hypotheses may also be assigned priority levels by the data analyst of the system. Further, a drop down menu 170 is provided in the interface for selecting a particular type of data element.

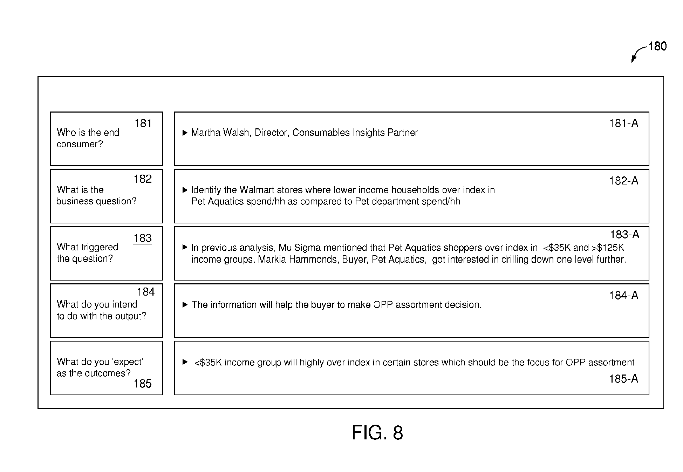

FIG. 8 is an example structured questionnaire interface 180 for an example problem statement implemented by a data management tool implemented according to aspects of the present technique. The structure questionnaire interface includes a set of questions that helps further define the problem statement and facilitates quick, relevant and actionable insights.

As shown, the structured questionnaire interface has a set of pre-defined questions as shown in cells 181 through 185. Each question has a corresponding input field depicted by reference numerals 181-A through 185-A. One or more users may provide answers to each question as shown in the example illustration.

In certain embodiments, the SCQ matrix and the hypothesis matrix may be interchangeably used with the structure questionnaire. Typically, this structure questionnaire is used for a subset of a large problem or for problems that require a quick attention.

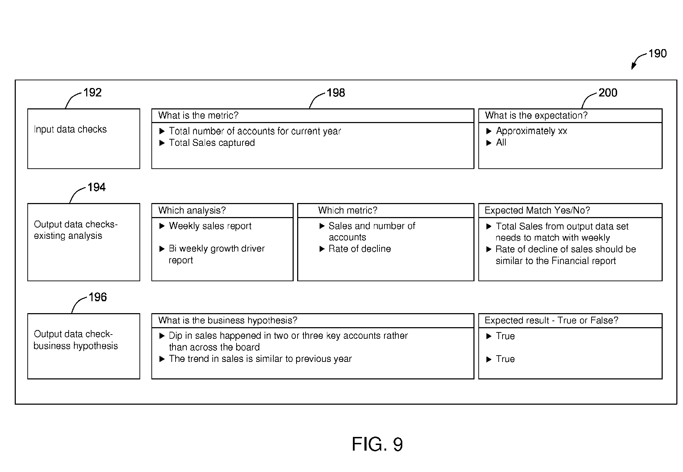

FIG. 9 is an example quality check questionnaire 190 for an example problem statement implemented by a data management tool implemented according to aspects of the present technique. In the illustrated embodiment, the cells 192, 194, and 196 includes various types of data checks like input data check, output data check and output data checks for hypothesis matrix respectively that are performed to obtain relevant data. In certain embodiments, for performing input data check, the data elements may be categorized as a matric and an expectation (cells 198 and cell 200). The format may also be used for performing output data checks for existing analysis that includes determining the analysis, defining the metric and determining matches for the expectations. Further, the quality check questionnaire 190 may also be used to perform output data checks for hypotheses matrix that includes determining the hypotheses and the expected results.

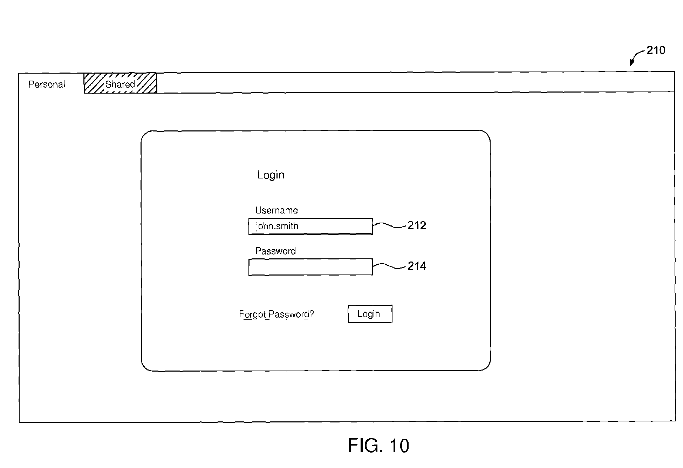

FIG. 10 is an example log-in screen 210 of a data management tool implemented according to aspects of the present technique. In this exemplary embodiment, the system provides secured access to a single user by authenticating unique usernames (cell 212) and corresponding passwords (cell 214) assigned to each user of the system. The system can be accessed in two modes that are single user mode and shared mode. For accessing the system through single user mode the data analyst logs in using a personal interface. The shared mode is used by multiple users. In one embodiment, the data collation system is hosted in a cloud based environment. In another embodiment, the data collation system resides in a shared server.

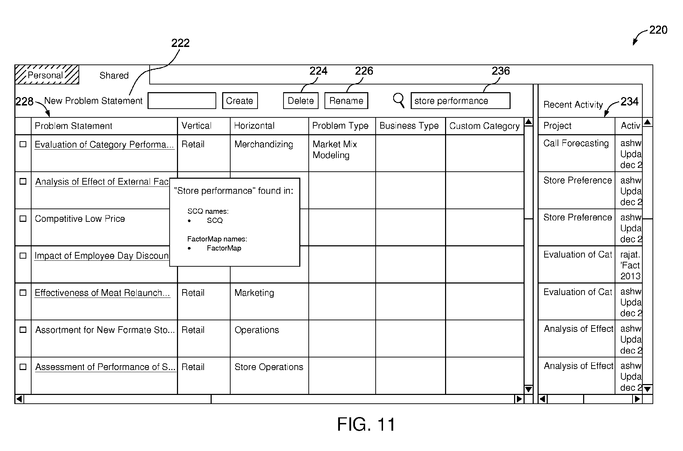

FIG. 11 is an example home screen of a data management tool implemented according to aspects of the present technique. The data management tool includes a home screen as shown reference numeral 220. Users may create a new project by providing the required data in input field 22. In one embodiment, each project has a specific problem statement defined by the client (or users). Projects created by the user can also be deleted or renamed as represented by reference numerals 224 and 226. In addition, other project management options may be available.

All projects created in the tool may be stored in a library. Further, a search field 236 is also provided in the interface to search projects of interest. For example, users may search existing projects based on keywords. In the illustrated example, 'store performance' is being searched and all projects relating to the keyword is listed.

Each problem statement can be expanded to see the underlying components such as the situation-complication-question (SCQ) matrix, a factor map including a plurality of factors affecting the problem and a hypothesis matrix including a plurality of hypotheses associated with the problem.

The screen 220 also includes a recent activity cell 234 representing a recent activity associated with any of the listed problem statements. This provides a quick view of the chronological order of projects being executed by the tool.

It will be understood by those within the art that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present.

For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations. In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations).

The following numbered statements further describe the invention:
1. A data management system comprising:
   a data collation module configured to collect data for a problem statement, wherein the problem statement is specified by a client, and wherein the data collation system comprises:
      a situation control question (SCQ) module configured to create a SCQ matrix; wherein the SCQ map is configured to enable one or more users to define a current state and a desired solution of a problem defined by the problem statement;
      a factor map module configured to create a factor map; wherein the factor map interface is configured to enable one or more users to enumerate a plurality of factors that directly and/or indirectly contribute to the problem;
      a hypothesis module configured to create a hypothesis matrix, wherein the hypothesis matrix is configured to enable one or more users to formulate one or more hypotheses based on the problem statement; and
      memory circuitry coupled to the data collation module and configured to store data related to the problem statement.
2. The data management system of statement 1, wherein the SCQ matrix is further configured to enable one or more users to identify gaps between the current state and the desired solution.
3. The data management system of statement 2, wherein the SCQ matrix is further configured to enable one or more users to provide one or more questions related to the desired solution.
4. The data management system of statement 1, wherein the factor map is further configured to enable one or more users to add and/or delete factors contributing to the problem.
5. The data management system of statement 1, wherein the hypothesis matrix is configured to enable one or more users to add and/or delete a plurality of component questions to each hypothesis in the hypothesis matrix.
6. The data management system of statement 5, wherein the hypothesis matrix is configured to enable one or more users to add and/or delete a plurality of data elements to each hypothesis in the hypothesis matrix.
7. The data management system of statement 1, wherein the data collation module further comprises a structured questionnaire module configured to provide a structured questionnaire to enable one or more users to provide answers to a plurality of questions.
8. The data management system of statement 7, wherein the structured questionnaire comprises a plurality of pre-defined questions.
9. The data management system of statement 1, wherein the data collation module further comprises a quality check questionnaire module configured to create a quality check chart.
10. The data management system of statement 1, wherein the quality check chart comprises a metric and an expectation comparison.
11. The data management system of statement 1, wherein the data collation module is hosted on a shared network to enable access by a plurality of users.
12. The data management system of statement 1, wherein the memory circuitry comprises a library configured to store a plurality of problem statements defined by a plurality of clients.
13. The data management system of statement 5, wherein the library comprises a search option configured to enable one or more users to search the plurality of problem statements and access corresponding data stored in the library.
14. A data management tool for collating data for a defined problem statement, the data management tool comprising:
   a SCQ interface configured to enable one or more users to define a current state and a desired solution of a problem defined by the problem statement;
   a factor map interface configured to enable one or more users to enumerate a plurality of factors that directly and/or indirectly contribute to the problem; and
   a hypothesis interface configured to enable one or more users to formulate one or more hypotheses based on the problem statement; wherein the one or more hypotheses are represented together in a hypothesis matrix.
15. The data management tool of statement 14, wherein the SCQ interface is further configured to:
   enable one or more users to identify gaps between the current state and the desired solution; and
   enable one or more users to provide one or more questions related to the desired solution.
16. The data management tool of statement 14, wherein the factor map interface is further configured to enable one or more users to add and/or delete factors contributing to the problem.
17. The data management tool of statement 14, wherein the hypothesis interface is configured to enable one or more users to add and/or delete a plurality of component questions to each hypothesis in the hypothesis matrix and a plurality of data elements to each hypothesis in the hypothesis matrix.
18. The data management tool of statement 14, further comprising a structured questionnaire interface configured to enable one or more users to provide answers to a plurality of questions; wherein the structured questionnaire interface comprises a plurality of pre-defined questions.
19. The data management tool of statement 14, further comprises a quality check questionnaire configured to create a quality check chart; wherein the quality check chart comprises a metric and an expectation comparison.
20. The data management tool of statement 14, further comprising a library configured to store a plurality of problem statements defined by a plurality of clients; wherein the library comprises a search option configured to enable one or more users to search the plurality of problem statements and access corresponding data stored in the library.

While only certain features of several embodiments have been illustrated and described herein, many modifications and changes will occur to those skilled in the art. It is, therefore, to be understood that the appended claims are intended to cover all such modifications and changes as fall within the true spirit of the invention.

## Claims

1. A data management system comprising:
a data collation module configured to collect data for a problem statement, wherein the problem statement is specified by a client, and wherein the data collation system comprises:
a situation control question (SCQ) module configured to create a SCQ matrix; wherein the SCQ map is configured to enable one or more users to define a current state and a desired solution of a problem defined by the problem statement;
a factor map module configured to create a factor map; wherein the factor map interface is configured to enable one or more users to enumerate a plurality of factors that directly and/or indirectly contribute to the problem;
a hypothesis module configured to create a hypothesis matrix, wherein the hypothesis matrix is configured to enable one or more users to formulate one or more hypotheses based on the problem statement; and
memory circuitry coupled to the data collation module and configured to store data related to the problem statement.

2. The data management system of claim 1, wherein the SCQ matrix is further configured to enable one or more users to identify gaps between the current state and the desired solution.

3. The data management system of claim 2, wherein the SCQ matrix is further configured to enable one or more users to provide one or more questions related to the desired solution.

4. The data management system of claim 1, wherein the factor map is further configured to enable one or more users to add and/or delete factors contributing to the problem.

5. The data management system of claim 1, wherein the hypothesis matrix is configured to enable one or more users to add and/or delete a plurality of component questions and a plurality of data elements to each hypothesis in the hypothesis matrix.

6. The data management system of claim 1, wherein the data collation module further comprises a structured questionnaire module configured to provide a structured questionnaire to enable one or more users to provide answers to a plurality of questions.

7. The data management system of claim 1, wherein the data collation module further comprises a quality check questionnaire module configured to create a quality check chart.

8. The data management system of claim 1, wherein the data collation module is hosted on a shared network to enable access by a plurality of users.

9. The data management system of claim 1, wherein the memory circuitry comprises a library configured to store a plurality of problem statements defined by a plurality of clients; wherein the library comprises a search option configured to enable one or more users to search the plurality of problem statements and access corresponding data stored in the library.

10. A data management tool for collating data for a defined problem statement, the data management tool comprising:
a SCQ interface configured to enable one or more users to define a current state and a desired solution of a problem defined by the problem statement;
a factor map interface configured to enable one or more users to enumerate a plurality of factors that directly and/or indirectly contribute to the problem; and
a hypothesis interface configured to enable one or more users to formulate one or more hypotheses based on the problem statement; wherein the one or more hypotheses are represented together in a hypothesis matrix.

11. The data management tool of claim 10, wherein the SCQ interface is further configured to:
enable one or more users to identify gaps between the current state and the desired solution; and
enable one or more users to provide one or more questions related to the desired solution.

12. The data management tool of claim 10, wherein the factor map interface is further configured to enable one or more users to add and/or delete factors contributing to the problem.

13. The data management tool of claim 10, wherein the hypothesis interface is configured to enable one or more users to add and/or delete a plurality of component questions to each hypothesis in the hypothesis matrix and a plurality of data elements to each hypothesis in the hypothesis matrix.

14. The data management tool of claim 10, further comprising:
a structured questionnaire interface configured to enable one or more users to provide answers to a plurality of questions; wherein the structured questionnaire interface comprises a plurality of pre-defined questions; and
a quality check questionnaire configured to create a quality check chart; wherein the quality check chart comprises a metric and an expectation comparison.

15. The data management tool of claim 10, further comprising a library configured to store a plurality of problem statements defined by a plurality of clients; wherein the library comprises a search option configured to enable one or more users to search the plurality of problem statements and access corresponding data stored in the library.
